# FASCICULE DE BREVET EUROPEEN

(11) **EP 1 286 085 B1**
(45) Date de publication et mention de la délivrance du brevet: **22.09.2004**
(21) Numéro de dépôt: 02292024.3
(22) Date de dépôt: 08.08.2002
(51) Int. Cl.: F16H 25/24, G05G 7/02, F16H 25/18

(54) **Dispositif de transformation d'un mouvement de translation en mouvement oscillant**
Anordnung zum Umwandeln einer hin- und hergehenden Bewegung in eine schwingende Bewegung
Device for converting a reciprocating motion into an oscillating motion

(30) Priorité: 23.08.2001 FR 0111148
(43) Date de publication de la demande: 26.02.2003
(73) Titulaire: VALEO VISION, 93012 Bobigny Cédex (FR)
(72) Inventeur: Chave, Rémy, 75007 Paris (FR)

(56) Documents cités:
- EP-A- 0 373 641
- DE-A- 2 311 500
- DE-A- 2 809 368
- DE-A- 3 841 460
- FR-A- 2 383 363
- US-A- 2 240 087
- US-A- 3 864 983
- US-A- 3 874 245
- PATENT ABSTRACTS OF JAPAN vol. 016, no. 229 (M-1255), 27 mai 1992 (1992-05-27) & JP 04 046252 A (NIHON SUKAI ROBOTSUTO KK), 17 février 1992 (1992-02-17)

## Description

La présente invention concerne les dispositifs d'entraînement en rotation de systèmes mobiles autour d'un axe de rotation, à partir du mouvement de translation de l'organe de sortie d'un actionneur linéaire.

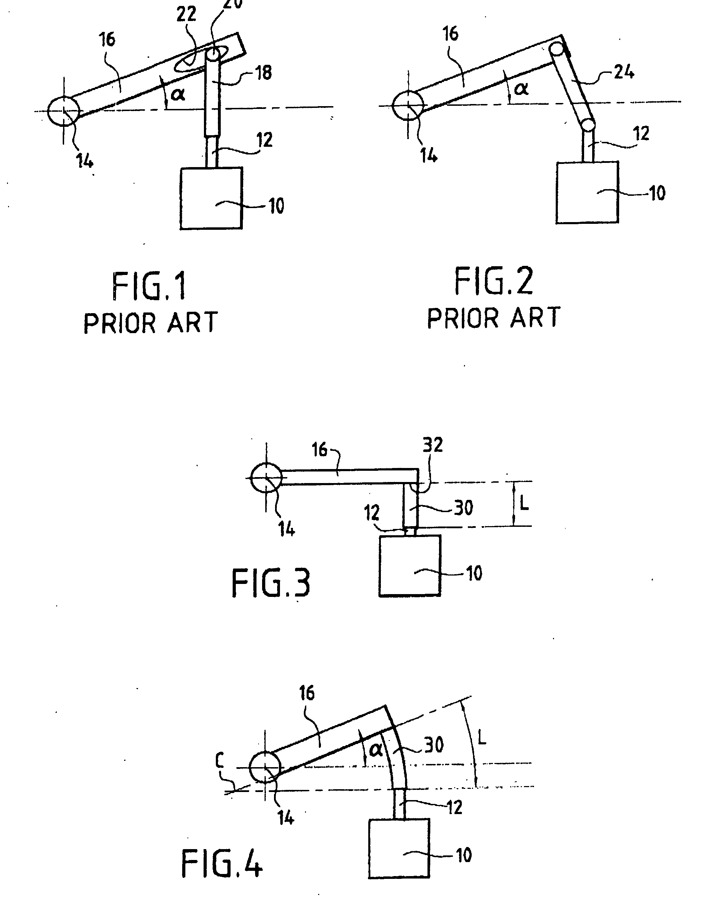

Lorsque l'on désire orienter un dispositif de poids et d'encombrement réduits selon des directions comprises dans une étendue angulaire réduite, il est courant d'utiliser, comme on l'a représenté sur la Figure 1, un actionneur linéaire 10 dont la tige de sortie 12 est susceptible d'être déplacée selon un mouvement de translation. L'actionneur linéaire 10 est fixé sur un bâti (non représenté) sur lequel est susceptible de pivoter, par l'intermédiaire d'un axe 14, le dispositif dont on désire commander les mouvements de rotation.

Le dispositif mobile en rotation comporte un organe de manoeuvre 16 coopérant avec un organe de liaison 18 relié à l'organe de commande à mouvement linéaire constitué par la tige de sortie 12. L'organe de liaison 18 est solidaire de la tige de sortie 12 de l'actionneur 10. La coopération entre l'organe de manoeuvre 16 et l'organe de liaison 18 est assurée par un pion 20 solidaire de l'organe de liaison 18 et reçu à coulissement dans une fente 22 formée dans l'organe de manoeuvre 16. Pour éviter tout risque de blocage, et pour faciliter la commande, un certain jeu est prévu entre le pion 20 et les bords de la fente 22.

Il en résulte que le positionnement du dispositif mobile en rotation ne peut être assuré avec une grande précision. D'autre part, l'angle de rotation du dispositif mobile en rotation n'est pas proportionnel à la distance parcourue par la tige de sortie 12 de l'actionneur 10. En effet, des considérations simples montrent que c'est la tangente de cet angle qui est proportionnelle à la course de la tige de sortie. Il en résulte que la commande du mouvement de la tige de sortie de l'actionneur doit être effectuée en conséquence, ce qui complique la loi et le circuit de commande.

Pour tenter de résoudre les problèmes de jeu de positionnement du dispositif mobile en rotation, il a été proposé de relier l'organe de sortie 12 de l'actionneur 10 et l'organe de manoeuvre 16 par une biellette rigide 24, articulée à ses deux extrémités sur ces deux organes, comme on l'a représenté sur la Figure 2. Un tel dispositif est connu du document US 3874245 A, qui divulgue toutes les caractéristiques du préambule de la revendication 1. Si cette solution minimise les jeux de positionnement, elle ne résout toutefois pas le problème de la proportionnalité entre l'angle de rotation du dispositif mobile en rotation et la course de la tige de sortie de l'actionneur, la relation entre ces deux valeurs étant dans ce cas une fonction relativement complexe.

On connaît du document US-A-3 864 983, un dispositif de transformation d'un mouvement de rotation en un mouvement de translation et inversement, dans lequel l'élément de tranformation entre ces deux mouvements est constitué par une pluralité de cellules en série. Chaque cellule est constituée d'une paire de séparateurs rotatifs, qui peuvent être adjacents à deux cellules. Les séparateurs sont reliés par des éléments de liaison flexibles, de telle manière qu'une rotation imprimée à l'un des séparateurs se traduit par une contraction ou un allongement de la cellule.

La présente invention se place dans ce contexte et elle a pour but de proposer un dispositif d'entraînement en rotation d'un système mobile autour d'un axe de rotation à partir du mouvement de translation de l'organe de sortie d'un actionneur linéaire qui ne présente pas de jeu de positionnement, dans lequel l'angle de rotation du système mobile en rotation soit proportionnel à la course de l'organe de sortie de l'actionneur, un tel dispositif d'entraînement devant être fiable, facile à installer et peu onéreux.

La présente invention a donc pour objet un dispositif d'entraînement en rotation d'un système rotatif mobile autour d'un axe sous l'action du mouvement de translation d'un organe de commande susceptible d'être animé d'un mouvement linéaire, le système rotatif étant solidaire d'un organe de manoeuvre coopérant avec un organe de liaison relié à l'organe de commande à mouvement linéaire,

Selon la présente invention, l'organe de liaison comporte une première extrémité rigidement solidaire de l'organe de manoeuvre du système rotatif, et une deuxième extrémité rigidement solidaire de l'organe de commande à mouvement linéaire.

Selon d'autres caractéristiques avantageuses et non limitatives de l'invention :
- l'organe de liaison est constitué d'un matériau flexible, mais présentant une résistance élevée au flambage pour une longueur prédéterminée de ce matériau ;
- l'organe de liaison est constitué d'un câble formé de brins métalliques enroulés en spirale ;
- l'organe de liaison est constitué d'un ressort à spires jointives ;
- l'organe de liaison est constitué d'une corde à piano ;
- l'organe de liaison est constitué d'une lame métallique en acier à ressort ;
- l'organe de liaison est constitué d'une matière plastique ou d'une tige de fibres de carbone ;
- un embout est solidarisé à au moins une extrémité du câble, l'embout étant fixé rigidement sur l'organe de manoeuvre ou sur l'organe de commande ;
- l'embout est solidarisé au câble par sertissage, soudure ou surmoulage ;
- l'un des embouts comporte au moins un prolongement susceptible de coopérer avec une portée formée sur l'autre embout si une contrainte excessive provoque le flambage du matériau flexible.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1, déjà commentée, représente schématiquement un dispositif d'entraînement en rotation de l'art antérieur ;
- La Figure 2, elle aussi déjà commentée, représente schématiquement un autre dispositif d'entraînement en rotation de l'art antérieur ;
- la Figure 3 représente schématiquement un dispositif d'entraînement en rotation selon la présente invention, dans une première position ;
- La Figure 4 représente schématiquement le dispositif d'entraînement en rotation de la Figure 3, dans une deuxième position ;
- La Figure 5 représente un exemple d'un organe de liaison utilisable dans le dispositif d'entraînement en rotation selon l'invention ;
- La Figure 6 représente un autre exemple d'un organe de liaison utilisable dans le dispositif d'entraînement en rotation selon l'invention ;
- La Figure 7 représente une vue en perspective une variante de réalisation du dispositif d'entraînement en rotation selon la présente invention en position de repos ;
- La Figure 8 représente une vue en perspective la variante de réalisation de la Figure 7 en position d'actionnement, et
- La Figure 9 représente une vue de côté du dispositif d'entraînement dans la position de la Figure 7.

Sur les différentes Figures, les éléments identiques ou jouant le même rôle sont affectés des mêmes signes de référence.

On a représenté sur les Figures 3 et 4 une vue schématique d'un dispositif d'entraînement en rotation réalisé selon la présente invention. Un tel dispositif utilise, comme dans l'art antérieur, un actionneur linéaire 10, dont la tige de sortie 12 est susceptible d'être déplacée selon un mouvement de translation. L'actionneur linéaire 10 est fixé sur un bâti (non représenté) sur lequel est susceptible de pivoter, par l'intermédiaire d'un axe 14, le dispositif dont on désire commander les mouvements de rotation. Le dispositif mobile en rotation comporte là aussi un organe de manoeuvre 16 par lequel il est possible de contrôler sa position angulaire d'un dispositif mobile en rotation autour de l'axe 14.

Conformément à la présente invention, un organe de liaison 30 est prévu entre l'organe de manoeuvre 16 et l'organe de commande 12, cet organe de liaison étant réalisé en un matériau flexible présentant une longueur L prédéterminée. Un tel matériau peut être constitué par exemple par un câble métallique formé de plusieurs brins enroulés en spirale à la façon d'un câble de traction, par une lame en acier à ressorts, par une corde à piano, et en général par tout matériau flexible, mais présentant une résistance élevée au flambage pour une longueur L de ce matériau. Des matériaux répondant à ces conditions comprennent également des matières plastiques, et des tiges formées de fibres de carbone ainsi que des ressorts à spires jointives.

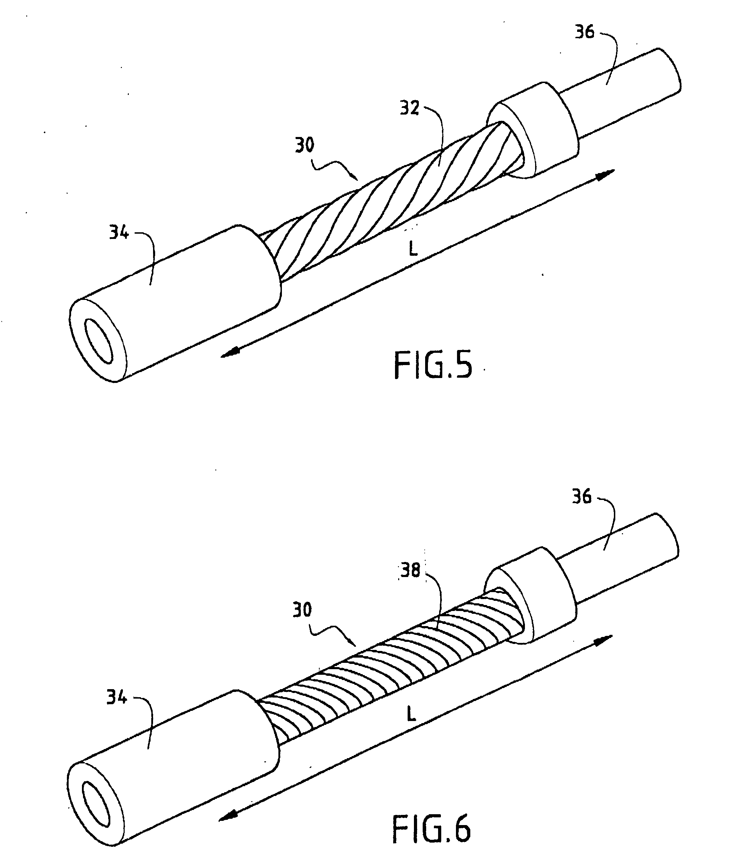

L'organe de liaison 30 est solidaire à la fois de l'organe de manoeuvre 16 et de l'organe de commande 12. On a représenté sur la Figure 5 un organe de liaison 30, formé d'un câble métallique 32 comportant plusieurs brins enroulés en spirale, utilisable comme organe de liaison selon la présente invention. On voit sur cette Figure que le câble 32 est solidaire à chacune de ses extrémités d'un embout 34 et 36, ces embouts 34 et 36 étant à leur tour fixés rigidement sur l'organe de manoeuvre 16 et sur la tige de sortie 12. Le câble 32 peut être solidarisé aux embouts 34 et 36 par sertissage, soudure, surmoulage, etc.. Dans le cas d'une lame en acier à ressort, les extrémités de cette lame peuvent être vissées ou soudées sur l'organe de manoeuvre 16 et sur l'organe de commande 12.

On a représenté sur la Figure 6 un autre organe de liaison 30, formé d'un matériau flexible, mais présentant une résistance élevée au flambage pour toute longueur L de ce matériau. Il s'agit en l'occurrence d'un organe constitué d'un ressort à spires 38 jointives. La section du fil utilisé pour constituer ce ressort sera avantageusement carrée. Comme dans le mode de réalisation de la Figure 5, le ressort 38 est solidaire à chacune de ses extrémités d'un embout 34 et 36, ces embouts 34 et 36 étant à leur tour fixés rigidement sur l'organe de manoeuvre 16 et sur la tige de sortie 12. Le ressort 38 peut être solidarisé aux embouts 34 et 36 par sertissage, soudure, surmoulage, etc..

On a représenté sur la Figure 3 une vue du dispositif d'entraînement lorsque la tige de sortie 12 de l'actionneur 10 occupe une position extrême dans laquelle elle est rentée au maximum dans le corps de l'actionneur 10. L'implantation de l'actionneur 10 sur le bâti portant l'axe 14 est telle que, dans cette position, l'axe de la tige de sortie 12 de l'actionneur passe par le point 32 de fixation de l'organe de liaison 30 sur l'organe de manoeuvre 16. Il en résulte que, dans cette position dite de repos, l'organe de liaison 30 est rectiligne, et situé entièrement dans le prolongement de la tige de sortie 12

Lorsque l'actionneur 10 est commandé pour que la tige de sortie 12 sorte du corps de l'actionneur, cette dernière exerce une poussée sur l'organe de liaison 30, qui à son tour exerce une poussée sur l'organe de manoeuvre 16, et l'ensemble adopte une position telle que celle qui est représentée sur la Figure 4. En effet, l'une des extrémités de l'organe de liaison 30 étant solidaire de la tige de poussée 12, elle reste dans le prolongement de celle-ci lors du mouvement de la tige de sortie 12. De même, l'autre extrémité de l'organe de liaison 30 étant solidaire de l'organe de manoeuvre 16, elle reste perpendiculaire à celle-ci lors du mouvement de la tige de sortie 12. Par contre, la partie médiane de l'organe de liaison étant flexible, et n'étant soumise à aucune contrainte, est libre de se déformer pour transmettre le mouvement de la tige de sortie 12 à l'organe de manoeuvre 16.

L'expérience montre que l'organe de manoeuvre adopte une forme très proche de celle d'un arc de cercle centré au point C de rencontre de droites passant par les points de fixation de l'organe de liaison 30 sur la tige de sortie 12 et sur l'organe de manoeuvre 16. Il en résulte que, la longueur L de l'organe de liaison 30 étant constante puisqu'il résiste au flambage, l'organe de manoeuvre 16, et donc le dispositif mobile en rotation autour de l'axe 14 solidaire de l'organe de manoeuvre 16, tourne d'un angle a proportionnel à la course de la tige de sortie 12.

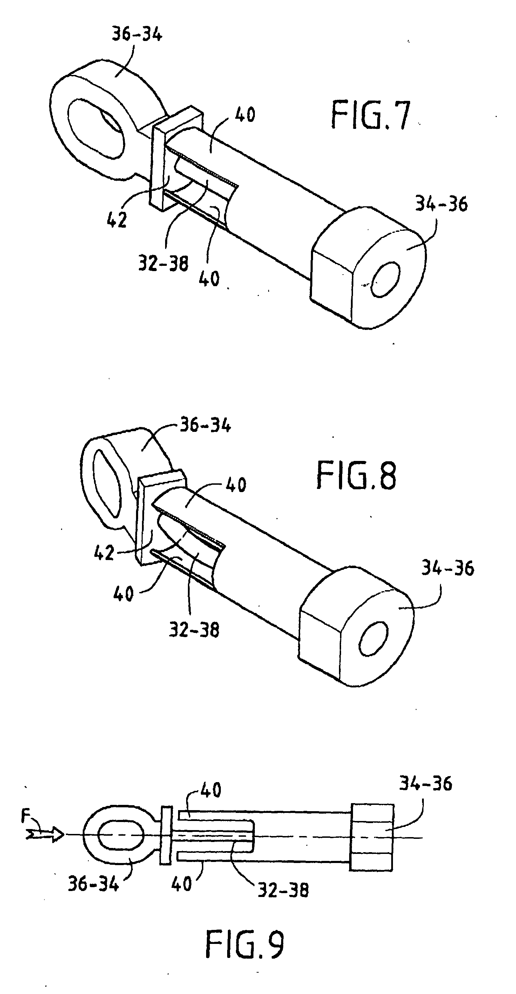

De manière à être sûr qu'aucun phénomène de flambage ne puisse venir perturber le fonctionnement du dispositif d'entraînement, on pourra prévoir une butée pour limiter au maximum ce phénomène. C'est ce que l'on a représenté sur les Figures 7 à 9.

On voit sur ces Figures que l'un des embouts 34 ou 36 comporte au moins un, deux dans l'exemple représenté, prolongement 40, s'étendant parallèlement à l'élément flexible de l'organe de liaison 30, lorsque ce dernier est en position de repos, jusqu'au voisinage d'une portée 42 formée sur l'autre embout 36 ou 34 respectivement.

Pour que ce ou ces prolongements 40 n'empêche pas l'élément flexible de se courber lors de l'actionnement, il ou ils sont disposés, par rapport à l'élément flexible tel que 32 ou 38, dans un plan passant par l'axe de rotation 14 de l'organe de manoeuvre 16. Ainsi, comme on le voit sur la Figure 8, quand l'organe flexible se courbe, rien ne vient interférer avec lui dans son mouvement.

Par contre, lors d'une manipulation, du transport ou de l'installation du dispositif d'entraînement selon l'invention, si une contrainte lui est appliquée dans la direction de la flèche F sur la Figure 9 et est telle qu'elle provoque le flambage de l'élément flexible, les deux embouts viendront au contact l'un de l'autre par l'intermédiaire de la portée 42 coopérant avec un ou deux prolongements 42.

Il en résulte qu'il est alors possible d'augmenter la flexibilité de l'élément flexible, sans nuire à la fiabilité du dispositif d'entraînement,

On a donc bien réalisé selon la présente invention, pour un dispositif de poids et d'encombrement réduits que l'on désire orienter selon des directions comprises dans une étendue angulaire réduite, un dispositif d'entraînement en rotation autour d'un axe de rotation à partir du mouvement de translation de l'organe de sortie d'un actionneur linéaire qui ne présente pas de jeu de positionnement, et dans lequel l'angle de rotation du système mobile en rotation est proportionnel à la course de l'organe de sortie de l'actionneur. Un tel dispositif d'entraînement étant particulièrement simple est tout à fait fiable, son installation est facile ,et il est très peu onéreux.

## Revendications

1. Dispositif d'entraînement en rotation d'un système rotatif mobile autour d'un axe (14) sous l'action du mouvement de translation d'un organe de commande (12) susceptible d'être animé d'un mouvement linéaire, le système rotatif étant solidaire d'un organe de manoeuvre (16) coopérant avec un organe de liaison (30) relié à l'organe de commande (12) à mouvement linéaire, l'organe de liaison (30) ayant une longueur (L) prédéterminée et constante, **caractérisé en ce que** l'organe de liaison (30) comporte une première extrémité rigidement solidaire de l'organe de manoeuvre (16) du système rotatif, et une deuxième extrémité rigidement solidaire de l'organe de commande (12) à mouvement linéaire.

2. Dispositif d'entraînement selon la revendication 1, **caractérisé en ce que** l'organe de liaison (30) est constitué d'un matériau flexible, et présentant une résistance élevée au flambage pour une longueur (L) prédéterminée de ce matériau.

3. Dispositif d'entraînement selon la revendication 2, **caractérisé en ce que** l'organe de liaison (30) est constitué d'un câble (32) formé de brins métalliques enroulés en spirale.

4. Dispositif d'entraînement selon la revendication 2, **caractérisé en ce que** l'organe de liaison (30) est constitué d'un ressort (38) à spires jointives.

5. Dispositif d'entraînement selon la revendication 2, **caractérisé en ce que** l'organe de liaison (30) est constitué d'une corde à piano.

6. Dispositif d'entraînement selon la revendication 2, **caractérisé** en ce l'organe de liaison (30) est constitué d'une lame métallique en acier à ressort.

7. Dispositif d'entraînement selon la revendication 2, **caractérisé en ce que** l'organe de liaison (30) est constitué d'une matière plastique ou d'une tige de fibres de carbone.

8. Dispositif d'entraînement selon l'une des revendications 3 à 7, **caractérisé en ce qu'**un embout (34, 36) est solidarisé à au moins une extrémité du câble (32), l'embout (34, 36) étant fixé rigidement sur l'organe de manoeuvre (16) ou sur l'organe de commande (12).

9. Dispositif d'entraînement selon la revendication 8, **caractérisé en ce que** l'embout (34, 36) est solidarisé au câble (32) par sertissage, soudure ou surmoulage.

10. Dispositif d'entraînement selon l'une quelconque des revendications précédentes, **caractérisé en ce que** l'un des embouts (34, 36) comporte au moins un prolongement (40) susceptible de coopérer avec une portée (42) formée sur l'autre embout (36, 34) si une contrainte excessive provoque le flambage du matériau flexible.

## Patentansprüche

1. Drehantriebsvorrichtung eines rotierenden Systems, das unter der Einwirkung einer Translationsbewegung eines durch eine lineare Bewegung bewegbaren Steuerorgans (12) um eine Achse (14) beweglich ist, wobei das rotierende System mit einem Betätigungsorgan (16) fest verbunden ist, das mit einem Verbindungsorgan (30) zusammenwirkt, welches mit dem Linearbewegungs-Steuerorgan (12) verbunden ist, wobei das Verbindungsorgan (30) eine vorbestimmte und konstante Länge (L) hat,
**dadurch gekennzeichnet, dass** das Verbindungsorgan (30) ein erstes Ende, das mit dem Betätigungsorgan (16) des rotierenden Systems starr verbunden ist, und ein zweites Ende aufweist, das mit dem Linearbewegungs-Steuerorgan (12) starr verbunden ist.

2. Antriebsvorrichtung nach Anspruch 1,
**dadurch gekennzeichnet, dass** das Verbindungsorgan (30) aus einem elastischen Material gebildet ist und für eine vorbestimmte Länge (L) dieses Materials eine hohe Knickfestigkeit aufweist.

3. Antriebsvorrichtung nach Anspruch 2,
**dadurch gekennzeichnet, dass** das Verbindungsorgan (30) aus einem Kabel (32) gebildet ist, das aus spiralförmig gewickelten Metalllitzen geformt ist.

4. Antriebsvorrichtung nach Anspruch 2,
**dadurch gekennzeichnet, dass** das Verbindungsorgan (30) aus einer Feder (38) mit nebeneinander liegenden Windungen gebildet ist.

5. Antriebsvorrichtung nach Anspruch 2,
**dadurch gekennzeichnet, dass** das Verbindungsorgan (30) aus einer Drahtsaite gebildet ist.

6. Antriebsvorrichtung nach Anspruch 2,
**dadurch gekennzeichnet, dass** das Verbindungsorgan (30) aus einem Metallstreifen aus Federstahl gebildet ist.

7. Antriebsvorrichtung nach Anspruch 2,
**dadurch gekennzeichnet, dass** das Verbindungsorgan (30) aus einem Kunststoff oder einer Kohlenstofffaserstange gebildet ist.

8. Antriebsvorrichtung nach einem der Ansprüche 3 bis 7,
**dadurch gekennzeichnet, dass** ein Ansatzstück (34, 36) mit wenigstens einem Ende des Kabels (32) fest verbunden ist, wobei das Ansatzstück (34, 36) starr auf dem Betätigungsorgan (16) oder dem Steuerorgan (12) befestigt ist.

9. Antriebsvorrichtung nach Anspruch 8,
**dadurch gekennzeichnet, dass** das Ansatzstück (34, 36) durch Crimpen, Schweißen oder Umspritzen fest mit dem Kabel (32) verbunden ist.

10. Antriebsvorrichtung nach einem der vorhergehenden Ansprüche,
**dadurch gekennzeichnet, dass** eines der Ansatzstücke (34, 36) wenigstens eine Verlängerung (40) aufweist, die mit einer auf dem anderen Ansatzstück ausgebildeten Auflagefläche (42) zusammenzuwirken vermag, falls eine übermäßige Beanspruchung das Knicken des elastischen Materials bewirkt.

## Claims

1. Device for driving in rotation a rotary system able to move about an axis (14) under the action of the translation movement of a control member (12) able to be given a linear movement, the rotary system being fixed to a manoeuvring member (16) cooperating with a connecting member (30) connected to the control member (12) with linear movement, the connecting member (30) having a predetermined constant length (L), **characterised in that** the connecting member (30) comprises a first end rigidly fixed to the manoeuvring member (16) of the rotary system, and a second end rigidly fixed to the control member (12) with linear movement.

2. Driving device according to Claim 1, **characterised in that** the connecting member (30) consists of a flexible material having a high resistance to buckling for a predetermined length (L) of this material.

3. Driving device according to Claim 2, **characterised in that** the connecting member (30) consists of a cable (32) formed of metallic strands wound in a spiral.

4. Driving device according to Claim 2, **characterised in that** the connecting member (30) consists of a spring (38) with contiguous turns.

5. Driving device according to Claim 2, **characterised in that** the connecting member (30) consists of a piano wire.

6. Driving device according to Claim 2, **characterised in that** the connecting member (30) consists of a metallic blade made from spring steel.

7. Driving device according to Claim 2, **characterised in that** the connecting member (30) consists of a plastics material or a carbon fibre rod.

8. Driving device according to one of Claims 3 to 7, **characterised in that** a ferrule (34, 36) is fixed to at least one end of the cable (32), the ferrule (34, 36) being rigidly fixed to the manoeuvring member (16) or to the control member (12).

9. Driving device according to Claim 8, **characterised in that** the ferrule (34, 36) is fixed to the cable (32) by crimping, welding or overmoulding.

10. Driving device according to any one of the preceding claims, **characterised in that** one of the ferrules (34, 36) comprises at least one extension (40) able to cooperate with a surface (42) formed on the other ferrule (36, 34) if an excessive force causes buckling of the flexible material.
